# EUROPEAN PATENT APPLICATION

(11) **EP 1 707 534 A1**
(43) Date of publication of application: **04.10.2006**
(21) Application number: 05703325.0
(22) Date of filing: 06.01.2005
(51) Int. Cl.: C01F 17/00, B01J 23/10, C09K 3/14

(54) **OXIDE SOLID SOLUTION POWDER**

(30) Priority: 21.01.2004 JP 2004012939
(71) Applicant: Mitsui Mining and Smelting Co., Ltd, Shinagawa-ku, Tokyo 141-8584 (JP)
(72) Inventor: OGURA, S., c/o MITSUI MINING & SMELTING CO., LTD., Ageo-shi, Saitama 3620021 (JP); KATO, K., c/o MITSUI MINING & SMELTING CO., LTD., Ageo-shi, Saitama 3620021 (JP)
(74) Representative: Klunker . Schmitt-Nilson . Hirsch
(86) International application number: PCT/JP2005/000053
(87) International publication number: WO 2005/070832

(57) **Abstract**

An oxide solid solution powder composed mainly of an oxide of cerium can be used as an abrasive. An abrasive providing a polished surface having a high polished surface precision when used as an abrasive is provided. When glass materials such as glass substrates are polished by using the oxide solid solution powder in which an oxide of calcium is dissolved as a solid solution in rare earth oxides composed mainly of cerium oxide, the oxide solid solution powder can provide polished surfaces having a high polished surface precision, and is suitable for abrasives. Dissolving calcium element as a solid solution in rare earth oxides composed mainly of cerium oxide is believed to raise the chemical polishing power, and provide a higher polished surface precision.

## Description

### Technical Field

The present invention relates to an oxide solid solution and, particularly, to an oxide solid solution powder composed mainly of a rare earth oxide such as cerium oxide.

### Background Art

Rare earth oxides such as cerium oxide are used for various applications such as abrasives, catalyst carriers and ultraviolet absorbents. For example, rare earth oxides composed mainly of cerium oxide are known to be useful as abrasives, and used as abrasives for glass materials and the like such as, particularly, glass substrates for optical discs, magnetic discs, LCDs and HDs. Abrasives (rare earth oxides) exhibiting a high polished surface precision are desired in the fields of using abrasives, particulady, in the fields of manufacturing electronic devices using the glass substrates as above.

The abrasives used in these fields include, for example, a slurry abrasive (see Patent Document 1), which is obtained by mixing a bastonaesite abrasive containing cerium oxide with cerium fluoride and calcium sulfate and further water in preparing an abrasive sluny. The presence of calcium ions in the sluny is expected to prevent precipitation of particles in the slurry and clogging of an abrasive pad, and prevent occurrence of abrasive scratches.

There is altematively an abrasive (see Patent Document 2), which is manufactured by mixing a rare earth carbonate and a rare earth oxide that are main raw materials of the abrasive with calcium chloride before a baking process in manufacturing the abrasive, and thereafter baking. With calcium chloride mixed before baking, the abnormal particle growth at baking is suppressed, and the average particle size and particle size distribution are easily controlled in baking, whereby an abrasive having a small average particle size can be easily manufactured. As a result, an abrasive which prevents the degradation of the polished surface precision even if it does not contain a fluorine component can be manufactured.
[Patent Document 1]: Japanese Patent Laid-Open No.06-330025
[Patent Document 2]: Japanese Patent Laid-Open No.2002-155269

Although, by using these abrasives, the polished surface having a relatively high polished surface precision is provided, the demanded polished surface precision becomes gradually higher. For example, for the precise polishing in the fields as described above, the polished surface precision of 3 Å or less in average surface roughness (Ra), further, 2 Å or less, is sometimes desired in recent years. However, the slurry abrasive and the abrasive as above cannot secure such a high polished surface precision.

Thus, for obtaining abrasives having a higher polished surface precision, the developments of abrasives having a smaller average particle size and a lower coarse particle content have been taken place. As a finer abrasive, for example, a so-called hyperfine silica abrasive of 0.2 µm or less in particle size is known. Also, as an abrasive containing a rare earth oxide such as cerium oxide, a hyperfine (e.g., approximately 0.01 µm) zirconium-based abrasive composed of a complex oxide of zirconium and cerium (Ce-Zr complex oxide) is known (see Patent Document 3). However, a sufficient polished surface precision cannot be secured even with using such hyperfine abrasive.
[Patent Document 3]: Japanese Patent Laid-Open No.10-237425

The techniques to obtain a high polished surface precision other than using an abrasive having a high polished surface precision include: a method of making the average particle size of crystals in the crystal part of a crystallized glass substrate to be polished, into being fine (see Patent Document 4); a method of polishing with an abrasive composed of smaller-sized abrasive grains than the crystal particle size in the crystal part of a glass substrate (see Patent Document 5); a method of the surface treatment (washing) of a to-be-polished surface with silicofluoric acid; and a method of polishing by using a slurry abrasive which uses fine abrasive grains and has a more diluted slurry concentration than ordinarily used ones (see Patent Document 6). However, none of these techniques are methods to secure a high polished surface precision by improving the characteristics of the abrasives themselves. Besides, since use of these techniques necessitates much more work, they raise the polishing cost and working time.
[Patent Document 4]: Japanese Patent Laid-Open No.2001-126236
[Patent Document 5]: Japanese Patent No.2736869
[Patent Document 6]: Japanese Patent Application Laid-Open No.2001-30732

### Disclosure of the Invention

### Problems to be Solved by the Invention

The present invention, achieved in view of the problems as described above, has an object to provide an oxide solid solution powder, composed mainly of a rare earth oxide such as an oxide of cerium, which can be used as an abrasive and provides polished surfaces having a high polished surface precision when used as an abrasive.

### Means for Solving the Problem

To solve the problems, the inventors of the present invention first studied the conventional techniques as described above. As a result, we estimated that it is not easy to obtain polishing particles exhibiting of a higher polished surface precision by making the polishing particles, i.e., rare earth oxide particles into being finer. Then, we decided to develop an abrasive (rare earth oxide) excellent in polished surface precision from another point of view. As the results of extensive studies, we have noticed the chemical polishing characteristic inherent in cerium oxide of a kind of rare earth oxide, that is, a characteristic (a kind of polishing action) that cerium oxide and glass reacts during polishing, and bonds of the glass are destroyed.

Noticing such characteristic and having studied extensively, we found that an abrasive using cerium oxide can enhance the polished surface precision by generating oxygen deficiency in cerium oxide particles and increasing the deficiency amount. As the result of further studies, we found that an element to act to increase the oxygen deficiency amount is made to be trapped in a cerium oxide structure, leading to enhancing the chemical polishing power cerium oxide has, further resulting in an increased polished surface precision, and thought of the present invention.

The present invention is an oxide solid solution powder in which an oxide of calcium is dissolved as a solid solution in a rare earth oxide composed mainly of an oxide of cerium. When glass materials such as glass substrates are polished by using the oxide solid solution powder as an abrasive, polished surfaces having a high polished surface precision are obtained. Namely, the polishing method using the oxide solid solution powder according to the present invention as an abrasive is suitable as a polishing method of glass substrates. The above-described oxide solid solution obtained by dissolving calcium element as a solid solution in an oxide of cerium such as cerium oxide has a large oxygen deficiency amount generated in the solid solution, so the large oxygen deficiency amount is considered to enhance the chemical polishing power cerium oxide has, and provide a higher polished surface precision. Thus, the present invention is an invention of an oxide solid solution, i.e., an abrasive itself, and is fundamentally different in the technical content from techniques in which when an abrasive sluny is prepared by mixing an abrasive and a solvent (e.g., water), a certain additive is added, thereby enhancing the polished surface precision.

Although the improvement of the polished surface precision by making polishing particles constituting abrasives fine has been intended in recent years, as already described in Background Art, the present invention is, as described above, to improve the polished surface precision by dissolving calcium element as a solid solution in an oxide of cerium, so is fundamentally different in the technical content from techniques of improvement of the polished surface precision by making particles fine. That is, the abrasive according to the present invention has a higher polished surface precision even if the particle size is the same, as compared with conventional abrasives. Thus, according to the present invention, since there is no need for making polishing particles fine, strengthening of pulverizing and classifying does not become a problem to be solved, and the polished surface precision can be improved without studying such techniques. For example, when the oxide solid solution powder according to the present invention is used as an abrasive, with polishing particles of approximately 2 µm to 3 µm in average particle size, a polished surface having a high polished surface precision of 3 Å or less in average surface roughness (Ra), further 2 Å or less, can be obtained. The average particle size is not limited in relation to the polished surface precision, but, for example, the polishing speed is generally higher for larger particle size. Therefore, in applications where an abrasive having the relatively high polishing speed is favorable, the average particle size of the oxide solid solution powder can be said to be preferably 1 µm or more, more preferably 2 µm or more. In applications where prevention of occurrence of polishing scratches is desired to the utmost, the average particle size of the oxide solid solution powder can be said to be preferably 3 µm or less.

The oxide solid solution powder according to the present invention has a ratio of the calcium element mass to the total mass of the oxide solid solution in terms of oxide of, preferably 10.7 mass% or less, more preferably 7.15 mass% or less. If the above ratio exceeds the upper limit, it becomes more possible that calcium element does not completely dissolve as a solid solution in the rare earth oxide such as cerium oxide, and emerges in the calcium oxide state outside the rare earth oxide particles. If such calcium oxide is present in the abrasive, it causes polishing scratches and adhesion of the abrasive (occurrence of hills). Since the effect of the polished surface precision being improved is obtained depending on the solid dissolution amount of the oxide of calcium, the amount of calcium element is sufficient as long as dissolved as a solid solution in a lowest amount from that view point (for example, the solid solution amount of the above ratio of 0.01 mass% or more is sufficient), and preferably 2.0 mass% or more for obtaining the sure effect. Now then, the total mass of an oxide solid solution in terms of oxide is determined by calculating a mass of each element in the oxide solid solution in terms of oxide when the composition of the oxide solid solution is understood. In calculating a mass of each rare earth element in terms of oxide in the present invention, the mass of the rare earth oxide in which no other component such as calcium dissolves as a solid solution is calculated in terms of oxide. The total amount in terms of rare earth oxide (TREO) used in the description below means the total mass of the rare earth oxides when all rare earth elements contained in an object substance are present as rare earth oxides.

In manufacturing an oxide solid solution powder according to the present invention, as a substance (solute) used for dissolving calcium element as a solid solution in an oxide of cerium, calcium nitrate, calcium chloride, calcium carbonate or the like is preferable, among which calcium nitrate is particularly preferable in respect of its superior liquid solution reactivity. The rare earth oxide is an oxide of rare earth element such as cerium, lanthanum, praseodymium or neodymium.

The oxide solid solution powder used as an abrasive is a rare earth oxide composed mainly of an oxide of cerium, and preferably dissolves an oxide of lanthanum and/or an oxide of praseodymium as a solid solution. This is because polishing tests exhibits that an oxide solid solution powder in which the lanthanum element and/or the praseodymium element is dissolved as a solid solution has occurrence of fewer polishing scratches and a more excellent polished surface precision than an oxide solid solution powder in which they are not dissolved as a solid solution. In preparing and baking a rare earth carbonate (e.g., cerium carbonate) to manufacture a rare earth oxide, if the rare earth carbonate in which lanthanum element and/or praseodymium element is dissolved as a solid solution is used, the excessive particle growth at baking, and the growth of coarse particles causing scratches to occur are considered to be suppressed. To obtain such an effect, the oxide solid solution powder is preferably one in which the ratio of the total mass of lanthanum oxide and praseodymium oxide to the total mass of the oxide solid solution in terms of oxide is 1 mass% or more. Here, if the ratio exceeds 40 mass%, the stability as an oxide solid solution is lowered, and trouble become liable to occur that the lanthanum element and the praseodymium element in the oxide solid solution deposit as lanthanum oxide and praseodymium oxide outside the oxide solid solution. Therefore, noticing such a viewpoint, the ratio described above is preferably 40 mass% or less.

Further, an oxide solid solution powder used as an abrasive is preferably one in which the ratio of the cerium oxide mass to the total mass of the oxide solid solution in terms of oxide is 50 mass% or more. In other word, an oxide solid solution powder composed mainly of cerium oxide is preferable. Because in an abrasive composed of the oxide solid solution powder of the present invention, a stable polishing speed cannot be secured if the ratio of the cerium oxide is less than 50 mass% since cerium oxide is the most essential component.

Further, we have studied for improvement of polishing speed of an oxide solid solution powder in which an oxide of calcium is dissolved as a solid solution in a rare earth oxide. As a result, we found that when zirconium element is dissolved as a solid solution together with calcium element in the rare earth oxide, the polishing speed is probably improved with a polished surface precision kept. As the result of further studies, we found that an abrasive in which a complex oxide (e.g., CaZrO₃) of calcium and zirconium emerges in the abrasive is inferior in the polished surface precision, but an oxide solid solution powder in which all calcium element and zirconium element are dissolved as a solid solution in a rare earth oxide is excellent in the polished surface precision. That is, an oxide solid solution powder for an abrasive is preferably one in which an oxide of calcium and an oxide of zirconium are dissolved as a solid solution in a rare earth oxide composed mainly of an oxide of cerium. Then, the suitable content of zirconium element dissolved as a solid solution was studied. As a result, the ratio of the zirconium oxide mass to the total mass of the oxide solid solution powder in terms of oxide is preferably 0.01 mass% to 15 mass%. Because if the ratio exceeds the above-indicated upper limit, the mechanical polishing power decreases with the decreased crystallinity of the polishing particles, and if the ratio is less than the lower limit, the polishing speed is not improved. For sufficiently improving the polishing speed, the ratio above is more preferably 2.2 mass% or more.

Thus, since the oxide solid solution powder of the present invention is excellent in the polished surface precision, it is suitable for abrasives. On the other hand, since it has excellent other characteristics, it is suitable also for applications other than abrasives. Since the oxide solid solution powder of the present invention is composed mainly of a rare earth oxide such as cerium oxide, and an oxide of calcium and/or an oxide of zirconium is dissolved as a solid solution therein, it has the characteristics of excellent heat resistance, weather resistance, corrosion resistance and safety, moreover of a high oxygen storage capacity (OSC), and of not having the photocatalytic activity capable of decomposition of organic components. Therefore, the oxide solid solution powder of the present invention is also suitable first for a catalyst or a promoter for automobiles. Note that "catalyst" recited in claims of the present invention should be construed to refer to a term including promoter as so-called accelerator. Further, the oxide solid solution powder of the present invention is also suitable for ultraviolet absorbents used, for example, by making them contained in cosmetics, coatings and the like in that it does not have the photocatalytic activity capable of decomposing organic components. Use of rare earth oxide solid solution powders in applications to catalyst carriers, promoters, catalysts, ultraviolet absorbents, etc. is the conventionally known using methods, so explanation of these methods will be omitted.

### Effect of the Invention

As understood from the above description, the oxide solid solution powder of the present invention, for example, can polish glass materials of glass substrates in a high polished surface precision in the use as an abrasive, provide catalyst carriers excellent in the atmosphere control property of A/F (air to fuel ratio) and the nitrogen oxides removal performance in the use as catalyst carriers for automobiles, and ultraviolet absorbents having a high ultraviolet absorption capability in the use as various kinds of ultraviolet absorbents such as ones contained in cosmetics, coatings, etc.

### Brief Description of the Drawings

Fig. 1 is a flow chart showing manufacturing processes;
Fig. 2 is an XRD chart relating to abrasives obtained in examples in a first embodiment;
Fig. 3 is a graph showing the relation between the ratio of calcium element in abrasive slurries and the polished surface precision;
Fig. 4 is an XRD chart relating to abrasives obtained in examples in Third Embodiment;
Fig. 5 is a graph showing a result of measurements of oxygen storage capacity in Fourth Embodiment;
Fig. 6 is a DSR showing a result of examinations of NOx adsorption species and adsorption ability in Fourth Embodiment;
Fig. 7 is a DSR showing a result of examinations of NOx adsorption species and adsorption ability in Fourth Embodiment;
Fig. 8 is a DSR showing a result of examinations of NOx adsorption species and adsorption ability in Fourth Embodiment; and
Fig. 9 is a DSR showing a result of examinations of NOx adsorption species and adsorption ability in Fourth Embodiment.

### Best Mode for Carrying Out the Invention

Hereinafter, preferred embodiments of an oxide solid solution powder according to the present invention will be illustrated with reference to figures and tables.

### First Embodiment:

In this embodiment, cerium carbonate, lanthanum carbonate, praseodymium carbonate and calcium carbonate were prepared, individually dissolved in a nitric acid aqueous solution, and added with pure water after foreign materials have been removed through filtration, to prepare a cerium nitrate aqueous solution, a lanthanum nitrate aqueous solution, a praseodymium nitrate aqueous solution and a calcium nitrate aqueous solution of 200 g/L (gram/liter) in terms of oxide mass.

### Example 1:

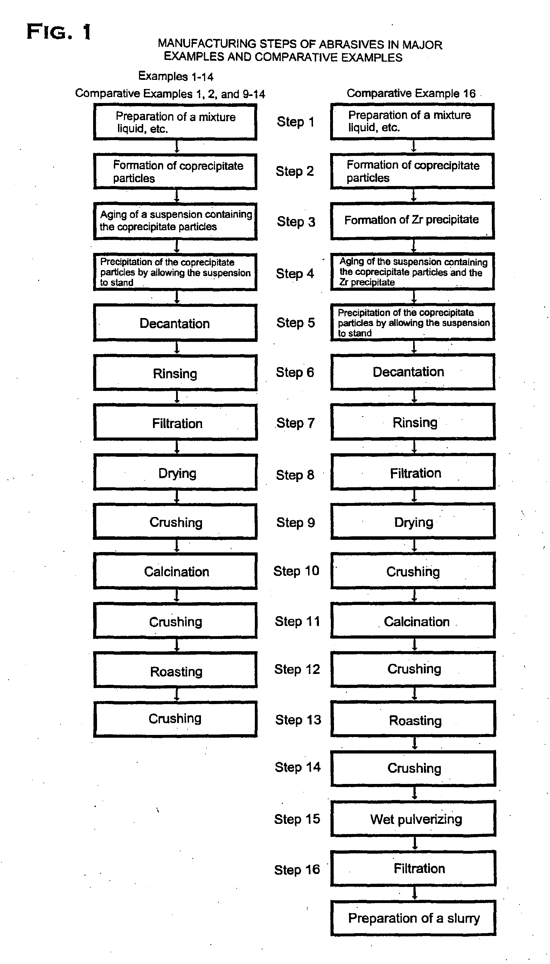

The cerium nitrate aqueous solution of 300 ml (milliliter), the lanthanum nitrate aqueous solution of 150 ml, the praseodymium nitrate aqueous solution of 35 ml and a calcium nitrate aqueous solution of 15 ml were mixed, and further added with pure water to obtain a mixture liquid of 3 L (liter) (step 1, see Fig. 1). The ratio in terms of oxide mass of respective rare earth elements and calcium contained in the mixted liquid was 60:30:7:3 (=CeO₂:La₂O₃:Pr₆O₁₁:CaO). A 1.2-times-equivalent ammonium hydrogencarbonate aqueous solution of 2 L (84 g/L) was prepared. Then, the total amount of the previously obtained mixture, while being stirred, was dropped in the ammonium hydrogencarbonate aqueous solution in a strong stirring state of 350 rpm to obtain coprecipitate particles containing carbonates (step 2). The feed speed at dropping was 50 ml/min. Next, the suspension containing the coprecipitate particles was aged for two hours at room temperature (step 3). The suspension after aging was diluted to 20 L with pure water. The diluted suspension was allowed to stand for three hours to precipitate coprecipitate particles (step 4). After the standing, decantations were performed till the volume of the precipitated coprecipitate particles reached less than 4 L (step 5). Thereafter, rinsing was performed with the use of a ceramic rinsing machine (step 6). The rinsing was performed till the nitric acid ion concentration in the suspension became 20 ppm or less to obtain a suspension containing the coprecipitate particles. After the rinsing, the suspension containing the coprecipitate particles was filtrated to obtain a cake of the coprecipitate particles (step 7).

Next, the obtained cake was dried with a hot- air dryer (a hot air temperature of 120°C, a drying time of 8 hours) (step 8); the obtained dried product was crushed (step 9); the crushed product was calcined in an electric furnace (a calcining temperature of 300°C, a calcining time of three hours) (step 10); the calcined product (so-called decarboxylated particles) was crushed (step 11); the crushed product was roasted in an electric furnace (a roasting temperature of 900°C, a roasting time of three hours) (step 12); and an oxide solid solution (rare earth-Ca complex) in which calcium oxide (CaO) was dissolved as a solid solution in a rare earth oxide composed mainly of cerium oxide (CeO₂) was obtained. The oxide solid solution was crushed (step 13) to obtain an abrasive (oxide solid solution powder). An average particle size of the obtained abrasive was 2.0 µm. In this Example, an oxide solid solution composed mainly of a rare earth oxide should be included in one form of a rare earth oxide, and the term "rare earth oxide" has been used for the oxide solid solution. Thus, when the term "rare earth oxide" is used for polishing particles of abrasives obtained in Examples and Comparative Examples, the "rare earth oxide" should involve an oxide solid solution in which an oxide other than the rare earth oxide is dissolved as a solid solution in a rare earth oxide.

### Examples 2 to 5, and Comparative Examples 1 and 2:

These examples and comparative examples were different from Example 1 in the ratio of respective rare earth elements in the mixed state in terms of oxide weight. Mixing ratios in the examples and the comparative examples are shown in Table 1. The conditions other than this was similar to Example 1, and explanations thereof will be omitted.

### Comparative Example 3:

In this comparative example, an abrasive was manufactured via a conventional manufacturing method. First, cerium carbonate, lanthanum carbonate and praseodymium carbonate were provided to obtain a mixture (200 g) thereof. The ratio of respective rare earth elements contained in the mixture in terms of oxide weight was 62:31:7 (=CeO₂:La₂O₃:Pr₆O₁₁). Then ,two plastic vessels (volumes were both 500 ml) were provided. The mixture of 100 g taken out partially from the mixture previously obtained, zirconia beads of 0.8 mm in size of 1,800 g and pure water of 200 ml were charged in each plastic vessel, and mixed and pulverized in wet for three hours with the use of a paint shaker. Thereafter, the zirconia beads were removed from the obtained mixture with a 30-mesh (aperture 500 µm) sieve, and the obtained mixture was filtrated to obtain a cake of the rare earth carbonate. The obtained cake was dried in a hot-air dryer (a hot air temperature of 120°C, a drying time of eight hours); the dried product was crushed; the crushed dried product was roasted in an electric furnace (a roasting temperature of 900°C, a roasting time of three hours); and the roasted product was crushed to obtain an abrasive. An average particle size of the obtained abrasive was 3.8 µm.

### Comparative Examples 4 to 7:

These comparative examples are different from Comparative Example 3 in the ratio of respective rare earth elements in the mixed state in terms of oxide weight. Mixing ratios in the comparative examples are shown in Table 1.

### Comparative Example 8:

In this comparative example, a high pure colloidal silica known as one for precise polishing of glass substrates was provided. An average particle size of the colloidal silica was 0.06 µm.

### Material Evaluation of Abrasives (XRD measurement):

For the abrasives of Examples 1 to 5, and Comparative Examples 1 and 2, XRD measurements were conducted with the use of an X-ray diffractometer (MXP18: manufactured by Mac Science Co. Ltd.). These measurements employed a copper (Cu) target, and measured X-ray diffraction intensities by the Cu-Kα₁ line obtained by radiating the Cu-Kα line. The other measuring conditions were a tube voltage of 40 kV, a tube current of 150 mA, the measuring range of 2θ=5° to 90°, sampling width of 0.02° and a scanning speed of 4.0°/min. The measured results (XDR charts) are shown in Figure 2, where, to facilitate reading charts, the charts of the abrasives other than that of Example 2 are shown on the graph by upward shifting the base levels.

As shown in Figure 2, the XRD charts of all the abrasives exhibit peaks near at 28.3° (=2θ) and near at 32.5°. These peaks indicate the presence of cubic cerium oxide. The XRD chart (the measuring range of 2θ =20° to 40°) of the abrasive of each example does not exhibit any peak other than the above peaks. By contrast, the XRD chart of Comparative Example 1 exhibits a peak near at 37.5°, which is not present in the examples; and the XRD chart of Comparative Example 2 exhibits peaks near at 32.3° and near at 37.5°, which are not present in the examples. These peaks indicate the presence of calcium oxide (CaO).

These results of XRD measurements reveal that, in the abrasives of Examples 1 to 5, all the calcium element in the raw material is dissolved as a solid solution in the rare earth oxide (complete solid solution); but in the abrasives of Comparative Examples 1 and 2, which exhibit peaks indicating the presence of calcium oxide, calcium element is not completely dissolved as a solid solution (incomplete solid solution), and calcium oxide is present in a state of emerging outside rare earth oxide particles of abrasive particles (see the column of presence/absence of CaO in Table 1).

### Polishing Tests:

For the abrasives obtained in the examples and the comparative examples, polishing tests were conducted with the use of an Oscar polishing machine. The polishing test method involved polishing simultaneously three pieces of glass material (made of BK-7, material to be polished) in a disc shape of 30 mm in diameter by using a surface table of 180 mm in diameter to which a polishing pad composed of polyurethane was affixed. First, abrasive slurries of 0.1 L were prepared with the use of the abrasives obtained in the examples and the comparative examples. The polishing test was conducted through feeding the prepared abrasive slurry at a rate of 3 L/min in a circulated manner. In polishing, the rotation speed of the polishing pad was 33 rpm; the oscillating speed was 30 rpm; and the oscillating width was 60 mm. The polishing pressure was 19.6 kPa (200 g/cm²); and the polishing time was 30 minutes.

The abrasive sluny in the polishing test was prepared as follows. In the examples and comparative Examples 1 and 2, the powder abrasive and pure water were mixed and stirred at room temperature, and then an abrasive slurry of 0.1 L in which the ratio of the abrasive to the whole abrasive slurry was 10 mass% was prepared. In Comparative Examples 3 to 7, a powder abrasive, a calcium chloride powder and water were mixed and stirred at room temperature, and then an abrasive slurry of 0.1 L in which the ratio of the abrasive to the whole abrasive slurry was 10 mass% was prepared. The mixing amount of the calcium chloride powder in Comparative Examples 3 to 7 was an amount, which the mass ratio of calcium element in the abrasive sluny was equivalent to the value shown in Table 1. The mixing amount was one determined on the basis that the mass ratio of calcium element in the abrasive slurry in Examples 1 to 5 and the mass ratio of calcium ions (Ca²⁺) in the suspension of the abrasive slurry in Comparative Examples 3 to 7 were made to be nearly identical. In Comparative Example 8, a prepared colloidal silica slurry of 40 mass% of 25 g and pure water of 75 ml were mixed and stirred at room temperature, and then an abrasive slurry of 0.1 L in which the ratio of the abrasive to the whole abrasive slurry was 10 mass% was prepared.

### Polishing Characteristics Evaluation of Abrasives:

After polishing, the polished surface of the glass material was rinsed with pure water and dried in a dust-free state. Thereafter, the decreased thickness (µm) of the polished object was measured, and the polishing speed was evaluated using "decreased thickness per unit time (µm/min)" calculated from the measured thickness and the polishing time. Besides, the average surface roughness (Ra) was measured by using an atomic force microscope (AFM), and the polished surface precision of the polished surface was evaluated using the measured roughness. The polishing speeds and the polished surface precisions of the examples and comparative examples are shown in Table 1.

**[Table 1]**

| | *2) Ca mass in raw material (wt%) | Cerium-based abrasive | | | | | | | *4) Ratio of Ca²⁺ in abrasive slurry (wt%) | Polishing characteristics | |
|---|---|---|---|---|---|---|---|---|---|---|---|
| | | Composition | | | | | | Average particle size D₅₀ ( m) | | polished surface Precision Ra (Å) | Polishing speed (µm/min) |
| | | | | | | | *3) Presence/ absence of CaO | | | | |
| | | TREO (wt%) | Content of each rare earth oxide in TREO(wt%) | | | | | | | | |
| | | | CeO₂ | La₂O₃ | Pr₆O₁₁ | Nd₂O₃ | | | | | |
| Example 1 | 2.14 | 96.98 | 61.86 | 30.93 | 7.20 | 0.02 | absent | 1.96 | - | 1.82 | 0.061 |
| Example 2 | 0.02 | 99.99 | 60.01 | 32.98 | 6.98 | 0.02 | absent | 2.98 | - | 2.97 | 0.164 |
| Example 3 | 0.72 | 98.97 | 60.61 | 32.32 | 7.05 | 0.02 | absent | 2.46 | - | 2.48 | 0.161 |
| Example 4 | 3.57 | 94.98 | 63.16 | 29.47 | 7.35 | 0.02 | absent | 1.78 | - | 1.78 | 0.054 |
| Example 5 | 7.15 | 89.98 | 66.67 | 25.56 | 7.76 | 0.02 | absent | 1.73 | - | 1.49 | 0.028 |
| Comparative Example 1 | 10.71 | 84.98 | 70.59 | 21.18 | 8.22 | 0.02 | present | 1.72 | - | 4.67 | 0.048 |
| Comparative Example 2 | 21.43 | 69.97 | 85.71 | 4.29 | 9.98 | 0.02 | present | 1.76 | - | 4.72 | 0.068 |
| Comparative Example 3 | - | 99.97 | 62.02 | 31.00 | 6.96 | 0.02 | - | 3.76 | 0.214 | 4.42 | 0.165 |
| Comparative Example 4 | - | 99.98 | 60.00 | 33.01 | 6.97 | 0.02 | - | 2.64 | 0.002 | 4.47 | 0.158 |
| Comparative Example 5 | - | 99.96 | 60.58 | 32.37 | 7.03 | 0.02 | - | 3.05 | 0.072 | 4.51 | 0.160 |
| Comparative Example 6 | - | 99.98 | 63.21 | 29.32 | 7.45 | 0.02 | - | 2.87 | 0.357 | 4.46 | 0.167 |
| Comparative Example 7 | - | 99.97 | 66.72 | 25.47 | 7.79 | 0.02 | - | 3.23 | 0.715 | 4.52 | 0.172 |
| ^{*1)}Comparative Example 8 | - | | | | | | | - 0.06 | - | 2.66 | 0.050 |

| | | | | | | | | | | | |
|---|---|---|---|---|---|---|---|---|---|---|---|
| *1) The abrasive is a colloidal silica. *2) The ratio of the Ca element mass to the total mass of the rare earth elements and Ca element in raw material in terms of oxide. *3) "absent" indicates not being detected by the XRD measurement, and "present" indicates being detected. "―" indicates that Ca was not added in the raw material, and a Ca component such as CaO was not present in the abrasive particles. *4) The ratio of the mass of added calcium ions (Ca²⁺) to the total mass of the abrasive sluny. "―" indicates that calcium ions were not added in the slurry. | | | | | | | | | | | |

As shown in Table 1, in the abrasives of Examples 1 to 5, the dissolving of calcium element as a solid solution into the rare earth oxides was complete, and as the result of the XRD measurement, calcium oxide was not detected. In the abrasives of Examples 1 to 5, the higher ratio of calcium element in the raw material had a more excellent polished surface precision. Again, these abrasives had, as compared with the abrasive (colloidal silica) of Comparative Example 8, the polished surface precision equal to or superior to and the polishing speed equal to or higher than the latter abrasive despite the remarkably larger polishing particle size.

By contrast, the abrasives of Comparative Examples 1 and 2 exhibited the incomplete dissolving of calcium element as a solid solution, as the result of the XRD measurement and calcium oxide was detected. Although the polishing speeds per se of the abrasives of Comparative Examples 1 and 2 were equal to those of the abrasives of Examples 4 and 5 and Comparative Example 8 (colloidal silica), the former abrasives produced many polishing scratches and had the inferior polished surface precision despite the higher ratio of calcium element in the raw material than that of the examples.

The results revealed that for manufacturing a ceric abrasive in which calcium element is dissolved as a solid solution in rare earth oxides, the abrasive is preferably one in which calcium element is completely dissolved as a solid solution, and calcium oxide does not emerge outside polishing particles (oxide solid solution particles), and that the ratio of the mass of calcium element to the total mass of the abrasive in terms of oxide is preferably 2.0 mass% to 10.7 mass% (more preferably, 7.15 mass% or less).

Of the abrasives of Comparative Examples 1 and 2, in which calcium oxide was detected in the abrasives, one which had a higher calcium element ratio in the raw material exhibits a tendency of having more polishing scratches and inferior polished surface precision. This tendency is the same as the tendency of the product polishing test result shown in Table 2 in Patent Document 2 (see the scratch values of Examples 3 to 5, and Comparative Example 3 in Table 2 in Patent Document 2). This revealed that if the manufacturing methods of abrasives of Examples 3 to 5, and Comparative Example 3 of Patent Document 2, that is, in which rare earth carbonates (a rare earth carbonate and/or a rare earth oxide) and an alkaline metal salt and/or an alkaline earth metal salt are simply mixed and roasted, is employed, abrasive particles in which the alkaline earth element is completely dissolved as a solid solution in the rare earth oxide cannot be manufactured, and an alkaline earth oxide emerges in the abrasives like the abrasives of Comparative Examples 1 and 2 for comparison with the examples of the present invention.

As shown in Table 1, the abrasives of Comparative Examples 3 to 7 in which calcium ions (Ca²⁺) were present in the suspension of the abrasive slurry had remarkably inferior polished surface precision as compared with the abrasives of Examples 1 to 5. This revealed that when a calcium component is used for the purpose of improving the polished surface precision, the calcium component is not made to be contained in calcium ion state in a suspension of an abrasive slurry, but an oxide solid solution powder in which calcium oxide is dissolved as a solid solution (complete solid dissolution) in a rare earth oxide composed mainly of cerium oxide is preferably used (as Example 1 to 5). Calcium components are contained in the state of alkaline earth metal, etc., in abrasive raw materials such as bastneasite concentrate ore used for manufacturing abrasives and industrial water; calcium ions derived from these sometimes inevitably remain in a suspension of an abrasive sluny. It was found that since the remaining calcium ions may deteriorate the polished surface precision, they are preferably avoided to the utmost.

### Relation Between Polishing Characteristics and the Mass Ratio of Calcium Element:

The relation between the polished surface precision and the ratio of the calcium element mass to the total mass of an abrasive in terms of oxide was studied.

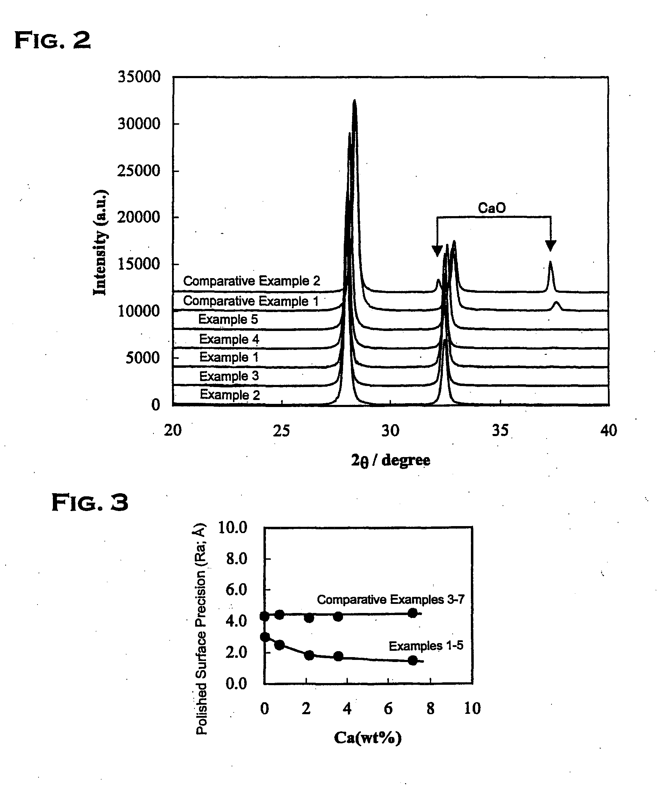

As shown in Fig. 3, in the case of the abrasives of Examples 1 to 5 (abrasives in which calcium element has been dissolved as a solid solution in a rare earth oxide), when the ratio of calcium element is in the range of more than 0 mass% to less than 2 mass% (especially, in the range of 0.5 mass% or more), the higher ratio of calcium element resulted in the improved polished surface precision. Calcium element of a ratio of 2 wt.% or more provided a stably excellent polished surface precision. Consequently, it was revealed that calcium element is preferably contained from a viewpoint of providing an abrasive having an excellent polished surface precision, and that the ratio of calcium element is preferably 0.5 mass% or more, more preferably 2 mass% or more for stably securing a high polished surface precision. However, taking the polishing scratches described before into consideration, the ratio is preferably 10.7 mass% or less, more preferably 7.15 mass% or less.

By contrast, the abrasives of Comparative Examples 3 to 7 (abrasive slurries in which calcium ions are present in a suspension) had the same polished surface precisions regardless of the mass ratio of contained calcium ions. That is, only addition of a calcium component in a state of calcium ions, etc., in a solution at preparing an abrasive slurry did not improve polishing characteristics such as polished surface precision and polishing speed.

### Second Embodiment:

Then, another embodiment is described. This embodiment relates to a so-called high-quality cerium-based abrasive having a high content of cerium oxide.

### Examples 6 to 9:

The mixing ratio of a cerium nitrate aqueous solution, a lanthanum nitrate aqueous solution, a praseodymium nitrate aqueous solution and calcium nitrate aqueous solution which were mixed in preparing mixture liquids during manufacturing abrasives was different from the first embodiment. The ratio of respective rare earth elements and calcium element in terms of oxide mass in a mixture liquid of each Example is shown in Table 2. Conditions other than this were the same as in Example 1 of the first embodiment.

### Comparative Example 9 to 12:

In these comparative examples, a calcium component was not added in the raw material, which was different from the above Examples 6 to 9. In Comparative Examples 9 to 12, the ratios of rare earth elements in terms of oxide mass in the abrasives were set so as to correspond to the mass ratio in the above Examples 6 to 9. Conditions other than this was the same in Examples 6 to 9.

For the abrasives of the above Examples 6 to 9, the aforementioned XRD measurements were conducted to evaluate the presence/absence of CaO. Further, for the abrasives of Examples 6 to 9 and Comparative Examples 9 to 12, the aforementioned polishing tests were conducted to evaluate the polished surface precision and the polishing speed. The results are shown in Table 2. The preparing method of abrasive slurries in the polishing tests were the same as in the examples of the first embodiment, for the abrasives obtained in any examples and comparative examples.

**[Table 2]**

| | *1) Ca mass in raw material (wt%) | Cerium-based abrasive | | | | | | | *3) Ratio of Ca²⁺ in abrasive slurry (wt%) | Polishing characteristics | |
|---|---|---|---|---|---|---|---|---|---|---|---|
| | | Composition | | | | | | Average particle size D₅₀ ( m) | | Polished surface precision Ra (Å) | Polishing speed (µm/min) |
| | | | | | | | *2) Presence/ absence of CaO | | | | |
| | | TREO (wt%) | Content of each rare earth oxide in TREO(wt%) | | | | | | | | |
| | | | CeO₂ | La₂O₃ | Pr₆O₁₁ | Nd₂O₃ | | | | | |
| Example 6 | 5.003 | 92.98 | 97.00 | 3.00 | 0.00 | 0.00 | absent | 2.24 | - | 2.46 | 0.076 |
| Example 7 | | 92.99 | 96.98 | 0.00 | 3.00 | 0.02 | absent | 2.98 | - | 2.63 | 0.074 |
| Example 8 | | 92.98 | 94.01 | 2.98 | 2.99 | 0.02 | absent | 2.44 | - | 2.34 | 0.078 |
| Example 9 | | 92.97 | 100 | 0 | 0 | 0 | absent | 3.02 | - | 2.94 | 0.068 |
| Comparative Example 9 | 0.00 | 96.98 | 97.01 | 2.99 | 0.00 | 0.02 | - | 3.27 | - | 4.84 | 0.183 |
| Comparative Example 10 | | 96.99 | 96.99 | 0.00 | 2.99 | 0.02 | - | 4.76 | - | 4.98 | 0.187 |
| Comparative Example 11 | | 96.98 | 94.02 | 3.00 | 2.96 | 0.02 | - | 3.58 | - | 4.65 | 0.189 |
| Comparative Example 12 | | 94.97 | 100 | 0 | 0 | 0 | - | 5.83 | - | 6.07 | 0.183 |

| | | | | | | | | | | | |
|---|---|---|---|---|---|---|---|---|---|---|---|
| *1) The ratio of the Ca element mass to the total mass of the rare earth elements and Ca element in raw material in terms of oxide. *2) "absent" indicates not being detected by the XRD measurement, and "present" indicates being detected. "―" indicates that Ca was not added in the raw material, and a Ca component such as CaO was not present in the abrasive particles. *3) The ratio of the mass of added calcium ions (Ca²⁺) to the total mass of the abrasive sluny. "―" indicates that calcium ions were not added in the slurry. | | | | | | | | | | | |

It is found from the results shown in Table 2 that also in the case of the so-called high-quality abrasives, the cerium-based abrasives composed of an oxide solid solution powder in which calcium oxide is dissolved as a solid 5 solution (complete solid dissolution) in a rare earth oxide composed mainly of cerium oxide have an excellent polished surface precision as compared with the abrasives in which calcium oxide is not dissolved as a solid solution, like the abrasives of the first embodiment.

### Third Embodiment:

Further, another embodiment is described. This embodiment relates to cerium-based abrasives composed of an oxide solid solution in which not only calcium oxide but also zirconium oxide were dissolved as a solid solution in a rare earth oxide.

In this embodiment, first, a cerium nitrate aqueous solution, a lanthanum nitrate aqueous solution, a praseodymium nitrate aqueous solution and a calcium nitrate aqueous solution of 200 g/L each was prepared as in the first embodiment and the second embodiment. Besides, zirconyl nitrate (zirconium oxynitrate) dihydrate was dissolved in pure water, and after foreign matters were removed via filtration, further added with pure water to prepare a zirconyl nitrate aqueous solution of 200 g/L in terms of oxide mass.

### Example 10:

In this example, a cerium nitrate aqueous solution of 300 ml, a lanthanum nitrate aqueous solution of 105 ml, a praseodymium nitrate aqueous solution 35 ml, a calcium nitrate aqueous solution of 15 ml and zirconyl nitrate aqueous solution of 45 ml prepared were mixed, and added with pure water to obtain a mixture liquid of 3 L (step 1, see Fig. 1). The ratio of the respective rare earth elements, calcium and zirconium contained in this mixture liquid in terms of oxide mass was 60:21:7:3:9 (=CeO₂:La₂O₃:Pr₆O₁₁:CaO:ZrO₂). The steps after the step 1 were the same as in the first embodiment. An abrasive of 3.9 µm in average particle size was obtained.

### Examples 11 to 14:

These examples were different from Example 10 in a mixing ratio of the respective aqueous solutions such as a cerium nitrate aqueous solution. The mixing ratios in the respective examples are shown in Table 3. Conditions other than this were the same as in Example 10.

### Example 15:

In this example, two plastic vessels (volumes were both 100 ml) were provided. The abrasive of 20 g partially taken out from the abrasive obtained in Example 10, zirconia beads of 0.8 mm in particle size of 360 g, a crystalline cellulose (product name: Avicel, manufactured by Asahi Kasei Corp.) aqueous solution of 1 mass% of 10 ml, sodium hexametaphosphate aqueous solution of 1 mass% of 10 ml and pure water of 20 ml were charged in each plastic vessel, and mixed and pulverized in wet for three hours using a paint shaker. Thereafter, the zirconia beads were removed from the obtained mixture with a 30-mesh (aperture 500 µm) sieve to obtain an abrasive slurry. Then, the obtained abrasive slurry was added with pure water to prepare an abrasive slurry in which the ratio of the abrasive to the whole slurry was 10 mass%. The using amount of the abrasive slurry in polishing tests was 0.1 L as in other examples. The abrasive of 2.0 µm in average particle size was obtained.

### Examples 16 to 19:

These examples were different from Example 15 in the abrasive which was charged in two provided plastic vessels. Example 16 used the abrasive obtained in Example 11; Example 17 used the abrasive obtained in Example 12; Example 18 used the abrasive obtained in Example 13; and Example 19 used the abrasive obtained in Example 14. Conditions other than the kinds of used abrasives were the same as in Example 15. The average particle sizes of the obtained abrasives are shown in Table 3.

### Comparative Examples 13 and 14:

These comparative examples were different from Example 15 in the ratio of the respective rare earth elements in the mixed state in terms of oxide mass. The mixing ratios of the comparative examples are shown in Table 3. Conditions other than this were the same as in Example 15. The average particle sizes of the obtained abrasives are shown in Table 3.

### Comparative Example 15:

This comparative example was different from Example 15 in the stirring speed at synthesizing (see the step 2 in Example 1). The stirring speed was 150 rpm. Conditions other than this were the same as in Example 15. An abrasive of 1.67 µm in average particle size was obtained.

### Comparative Example 16:

In this comparative example, of the aqueous solutions prepared first in the third embodiment, first, a cerium nitrate aqueous solution of 300 ml, a lanthanum nitrate aqueous solution of 105 ml, a praseodymium nitrate aqueous solution 35 ml, and a calcium nitrate aqueous solution of 15 ml were mixed, and added with pure water to obtain a mixture liquid A of 2.7 L. The ratio of the respective rare earth elements and calcium contained in this mixture liquid A in terms of oxide mass was 60:21:7:3 (=CeO₂:La₂O₃:Pr₆O₁₁:CaO). Apart from the mixture liquid A, a zirconyl nitrate aqueous solution of 45 ml was prepared, and added with pure water to obtain an aqueous solution B of 0.3 L (step 1). The zirconium mass in terms of oxide contained in the mixture liquid B was 9 g. Further, two liters of an ammonium hydrogencarbonate aqueous solution (concentration: 84 g/L) 1.2 times equivalent to the total amount of the mixture liquid A and the mixture liquid B was prepared. Then, the whole amount of the above obtained mixture liquid A, while being stirred, was dropped in the ammonium hydrogencarbonate aqueous solution in a stirring state to obtain coprecipitate particles containing the carbonates (step 2). Thereafter, the aqueous solution B was dropped in the ammonium hydrogencarbonate aqueous solution where the coprecipitate particles containing the carbonates were present in the same way as for the mixture liquid A to obtain a suspension containing a precipitate of a zirconium component (step 3). The feeding speed during dropping was 50 ml/min. Then, the suspension containing the coprecipitate particles and the precipitate of the zirconium component was aged for two hours at room temperature (step 4), and, after the aging, diluted to 20 L with pure water. The diluted suspension was allowed to stand for three hours to precipitate coprecipitate particles (step 5). After standing, decantation was performed till the volume of the precipitated coprecipitate particles reached less than 4 L (step 6). Thereafter, rinsing was performed with the use of a ceramic rinsing machine (step 7). The rinsing was performed till the nitric acid ion concentration in the suspension became 20 ppm or less. After rinsing, the aqueous solution containing the coprecipitate particles was filtrated to obtain a cake of the coprecipitate particles (step 8).

Next, the obtained cake was dried by a hot air dryer (a hot air temperature of 120°C, a drying time of 8 hours) (step 9); the obtained dried product was crushed (step 10); the crushed product was calcined in an electric furnace (a calcining temperature of 300°C, a roasting time of three hours) (step 11); the calcined product was crushed (step 12); the crushed product was roasted in an electric furnace (a roasting temperature of 900°C, a roasting time of three hours) (step 13); and the baked product was crushed (step 14) to obtain a powder of an oxide solid solution (rare earth elements-Ca-Zr complex oxide). The oxide solid solution of 20 g partially taken out from the obtained oxide solid solution, zirconia beads of 0.8 mm in particle size of 360 g, an Avicel aqueous solution of 1 mass% of 10 ml, sodium hexametaphosphate aqueous solution of 1 mass% of 10 ml and pure water of 20 ml were charged in each of two prepared plastic vessels (volumes were both 100 ml); and the oxide solid solution was mixed and pulverized in wet for three hours using a paint shaker (step 15). Thereafter, the zirconia beads were removed from the obtained mixture with a 30-mesh (aperture 500 µm) sieve to obtain an abrasive slurry (oxide solid solution slurry) (step 16). Then, the obtained abrasive slurry was added with pure water to prepare an abrasive slurry in which the ratio of the abrasive to the whole slurry was 10 mass% (step 17). The amount of the abrasive slurry used in polishing tests was 0.1 L as in other examples. The average particle size of the obtained abrasive was 1.8 µm.

For the abrasives of the above Examples 10 to 19 and Comparative Examples 13 to 16, the aforementioned XRD measurement was conducted to evaluate presence or absence of CaO (See Table 3). Of these Examples, the XRD charts for the abrasives of Example 15, Comparative Example 15 and Comparative Example 16 are shown in Fig. 4. For the abrasives of Examples 10 to 19 and Comparative Examples 13 to 16, the aforementioned polishing tests were conducted, and the polished surface precision and the polishing speed were evaluated. The results are shown in Table 3. The preparing methods of the abrasive slurries in the polishing tests were the same as in the examples of the first embodiment, for the abrasives obtained in Examples 10 to 14; and the methods for Examples 15 to 19 and Comparative Examples 13 to 16 were to use the abrasive slurries finally prepared, as they were, for the polishing tests.

As shown in Fig. 4, on the XRD charts of all the abrasives, peaks emerge near at 28.3° (=2θ) and near at 32.5°. These peaks indicate the presence of cubic cerium oxide. On the XRD chart for the abrasive of Comparative Example 15, peaks, which do not emerge for the abrasives of the examples, emerge near at 31.4° and near at 45.0°. These peaks indicate the presence of an oxide of zirconium (identified as CaZrO₃). On the XRD chart for the abrasive of Comparative Example 16, peaks, which do not emerge for the abrasives of the examples, emerge near at 29.7°, near at 34.5° and near at 49.4°. These peaks also indicate the presence of an oxide of zirconium (identified as Ce-Zr complex oxide).

These results of XRD measurements reveal that, in the abrasives of the examples, particularly Example 15, all the calcium element and zirconium element in the raw material are completely dissolved as a solid solution in the rare earth oxides; but in the abrasives of Comparative Examples 15 and 16, which exhibit peaks indicating the presence of an oxide of zirconium, zirconium element is not completely dissolved as a solid solution, and the oxide of zirconium is present in a state of emerging outside the abrasive particles (See the column of presence or absence of ZrO₂ in Table 3).

**[Table 3]**

| Example/ Comparative Example | *1) Ca component in raw material (wt%) | *2) Zr component in raw material (wt%) | Cerium-based abrasive | | | | | | | | *4) Ratio of Ca²⁺ in abrasive slurry (wt%) | Polishing characteristics | |
|---|---|---|---|---|---|---|---|---|---|---|---|---|---|
| | | | Composition (wt%) | | | | | | | Averager particle size D₅₀ ( m) | | Polished surface precision Ra (Å) | Polishing speed (µm/min) |
| | | | | | | | | *3) Presence/ absence of CaO | *3) Presence/ absence of ZrO₂ | | | | |
| | | | TREO (wt%) | Content of each rare earth oxide in TREO(w t%) | | | | | | | | | |
| | | | | CeO₂ | La₂O₃ | Pr₆O₁₁ | Nd₂O₃ | | | | | | |
| E 10 | 2.144 | 6.663 | 87.99 | 68.19 | 23.86 | 7.94 | 0.02 | absent | absent | 3.88 | - | 2.46 | 0.244 |
| E 11 | | 2.221 | 93.98 | 63.84 | 28.73 | 7.42 | 0.02 | absent | absent | 3.61 | - | 2.14 | 0.156 |
| E 12 | | 5.182 | 89.99 | 66.67 | 25.56 | 7.76 | 0.02 | absent | absent | 4.03 | - | 2.38 | 0.224 |
| E 13 | | 8.884 | 84.99 | 70.59 | 21.18 | 8.21 | 0.02 | absent | absent | 3.44 | - | 2.92 | 0.200 |
| E 14 | | 11.105 | 81.99 | 73.18 | 18.29 | 8.52 | 0.02 | absent | absent | 3.63 | - | 2.98 | 0.122 |
| E 15 | 2.144 | 6.663 | 87.99 | 68.19 | 23.86 | 7.94 | 0.02 | absent | absent | 2.01 | - | 1.86 | 0.250 |
| E 16 | | 2.221 | 93.98 | 63.84 | 28.73 | 7.42 | 0.02 | absent | absent | 1.69 | - | 1.65 | 0.164 |
| E 17 | | 5.182 | 89.99 | 66.67 | 25.56 | 7.76 | 0.02 | absent | absent | 1.74 | - | 1.93 | 0.234 |
| E 18 | | 8.884 | 84.99 | 70.59 | 21.18 | 8.21 | 0.02 | absent | absent | 2.13 | - | 2.56 | 0.212 |
| E 19 | | 11.105 | 81.99 | 73.18 | 18.29 | 8.52 | 0.02 | absent | absent | 1.92 | - | 2.87 | 0.136 |
| CE 13 | 2.144 | 14.806 | 76.98 | 77.93 | 12.99 | 9.06 | 0.02 | absent | absent | 1.77 | - | 4.25 | 0.072 |
| CE 14 | | 18.507 | 71.99 | 83.34 | 6.95 | 9.70 | 0.02 | absent | absent | 1.68 | - | 4.47 | 0.057 |
| CE 15 | 2.144 | 6.663 | 6.663 | 68.19 | 23.86 | 7.94 | 0.02 | absent | present | 1.67 | - | 5.81 | 0.167 |
| CE 16 | 2.144 | 6.663 | 87.99 | 68.19 | 23.86 | 7.94 | 0.02 | absent | present | 1.78 | - | 5.01 | 0.228 |

| | | | | | | | | | | | | | |
|---|---|---|---|---|---|---|---|---|---|---|---|---|---|
| *1) The ratio of the Ca element mass to the total mass in terms of oxide of the rare earth elements and Ca and Zr elements in raw material. *2) The ratio of the Zr element mass to the total mass in terms of oxide of the rare earth elements and Ca and Zr elements in raw material. *3) "absent" indicates not being detected through the XRD measurement, and "present" indicates being detected. "―" indicates that Ca and Zr were not added in the raw material, and a component such as CaO or ZrO₂ was not present in the abrasive particles. *4) The ratio of the mass of added calcium ions (Ca²⁺) to the total mass of the abrasive slurry. "―" indicates that calcium ions were not added in the slurry. | | | | | | | | | | | | | |

As shown in Table 3, in the abrasives of Examples 10 to 19, the solid dissolution of calcium element and zirconium element in the rare earth oxides was complete; as the results of the XRD measurements, calcium oxide and zirconium oxide were not detected. The abrasives of Examples 10 to 19 had an equal polished surface precision and a higher polishing speed as compared with the examples of the first embodiment. Consequently, it was revealed that the cerium-based abrasive composed of an oxide solid solution powder in which not only calcium element but also zirconium element are dissolved as a solid solution in a rare earth oxide composed mainly of cerium oxide is an excellent abrasive having a high polished surface precision and a high polishing speed as well. The abrasives of Examples 15 to 19 had a smaller average particle size and more excellent polished surface precision than those of Examples 10 to 14. Consequently, it was revealed that in the case of the complete solid dissolution of calcium element and zirconium element, oxide solid solution particles having a smaller average particle size is superior in polished surface precision and suitable for abrasives.

Although the abrasives of Comparative Example 13 and 14 had a higher ratio of zirconium element than those of the above examples, as the results of the XRD measurements, calcium oxide and zirconium oxide were not detected in any of them. Therefore, the solid dissolution of calcium element and zirconium element in the rare earth oxide is estimated to be complete. However, they were inferior in the polished surface precision to the abrasives of the examples. The reason is not completely clarified, but it is believed that if zirconium element is dissolved as a solid solution excessively in a rare earth oxide, the crystallinity of crystals of the rare earth oxide largely decreases, and the polishing characteristics such as the polished surface precision deteriorate. It is also believed that if zirconium element is dissolved as a solid solution excessively, the resulting oxygen deficiency amount is reduced as compared with the case where calcium element only is dissolved as a solid solution, which decreases the polishing characteristics such as the polished surface precision.

Further, in the abrasives of Comparative Examples 15 and 16, the solid dissolution of zirconium element was incomplete; as the results of the XRD measurements, in Comparative Example 15, an oxide of zirconium (identified as CaZrO₃) was detected; and in Comparative Example 16, another oxide of zirconium (identified as Ce-Zr complex oxide) was detected. The abrasives of these comparative examples were inferior in both the polished surface precision and the polishing speed to those of the examples.

These results revealed that when a cerium-based abrasive in which zirconium element in addition to calcium element is dissolved as a solid solution in rare earth oxides is manufactured, the abrasive in which calcium element and zirconium element are completely dissolved as a solid solution and in which calcium oxide and zirconium oxide do not emerge outside abrasive particles (oxide solid solution particles) is preferable, and also that the ratio of the mass of zirconium element mass to the total mass of the abrasive in terms of oxide is preferably 0.01 mass% to 15 mass%.

### Fourth Embodiment:

In this embodiment, the results of examination of oxide solid solutions according to the present invention for the catalytic characteristics is described. As the catalytic characteristics, the oxygen storage capacity (OSC) and NOx adsorption species and adsorption capability were examined. The samples being measured employed oxide solid solution powders shown in Table 4. In Example 9 and Comparative Example 12 in Table 4, abrasives were the same as the abrasive powder used in the second embodiment. Example 20 in Table 4 was manufactured by the method of the aforementioned first embodiment.

**[Table 4]**

| Example/ Comparative Example | *1) Ca component in raw material (wt%) | *2) Zr component in raw material (wt%) | Oxide solid solution | | | | | | | |
|---|---|---|---|---|---|---|---|---|---|---|
| | | | Composition (wt%) | | | | | | | Average particle size D₅₀ (µm) |
| | | | | | | | | *3) Presence/ absence of CaO | *3) Presence/ absence of ZrO₂ | |
| | | | TREO (wt%) | Content of each rare earth oxide in TREO(wt%) | | | | | | |
| | | | | CeO₂ | La₂O₃ | Pr₆O₁₁ | Nd₂O₃ | | | |
| E 9 | 5.003 | - | 92.97 | 100 | 0 | 0 | 0 | absent | - | 3.02 |
| E 20 | - | 10.499 | 85.80 | 100 | 0 | 0 | 0 | - | absent | 4.36 |
| CE 12 | 0 | - | 94.97 | 100 | 0 | 0 | 0 | - | - | 5.83 |

| | | | | | | | | | | |
|---|---|---|---|---|---|---|---|---|---|---|
| *1) The ratio of the Ca element mass to the total mass in terms of oxide of the rare earth elements and Ca and Zr elements in the raw material. *2) The ratio of the Zr element mass to the total mass in terms of oxide of the rare earth elements and Ca and Zr elements in the raw material. *3) "absent" indicates not being detected by the XRD measurement, and "present" indicates being detected. "―" indicates that Ca or Zr were not added in the raw material, and a component such as CaO or ZrO₂ was not present in the abrasive particles. | | | | | | | | | | |

### Oxygen storage capacity:

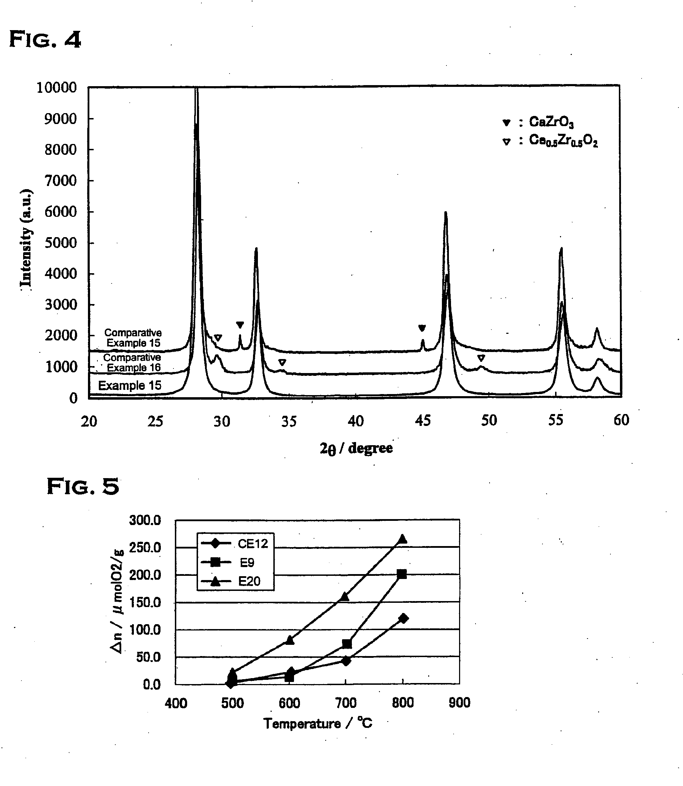

The oxygen storage capacity was measured in a sample being measured amount of 0.025±0.001 g by a thermal conductivity detector. The measured temperature was 400 to 800°C (every 100°C); the carrier gas was He; and the pulse size was 1.79 mL. The specific measuring procedure was as follows. A sample being measured was held at 800°C for 10 minutes in He of 200 ccm, and then cooled to a lowest measured temperature (400°C). Then, after each measured temperature was reached, O₂ pulses of four or more shots, and H₂ pulses and O₂ pulses alternately of four or more shots were introduced. The heat treatment at 800°C was performed at first only. The measurements were performed at temperatures raised step by step from 400°C. The evaluation method of the oxygen storage capacity (OSC) was to calculate the oxygen storage capacity from the ratio of the alternate pulse sizes of the H₂ pulse and the O₂ pulse based on the first O₂ pulse (an average value of three shots). The results are shown in Fig. 5.

Fig. 5 shows a graph in which an oxygen storage capacity at each measured temperature is plotted. From Fig. 5, it was observed that the oxygen storage capacity was improved in the order of Comparative Example 12, Example 9 and Example 20. Therefore, an oxide of cerium in which Ca or Zr was dissolved as a solid solution proves to have an improved oxygen storage capacity.

### NOx adsorption species and adsorption ability:

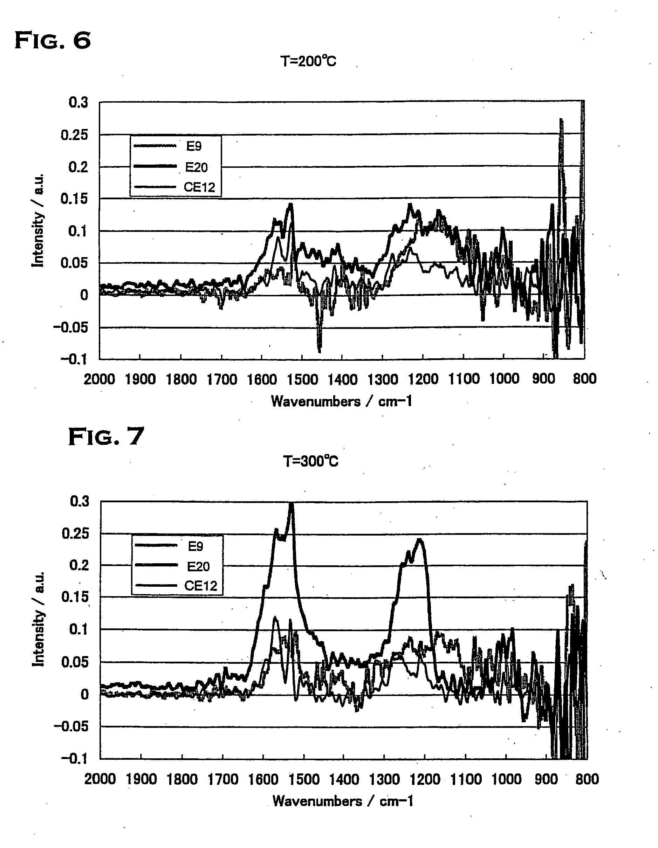

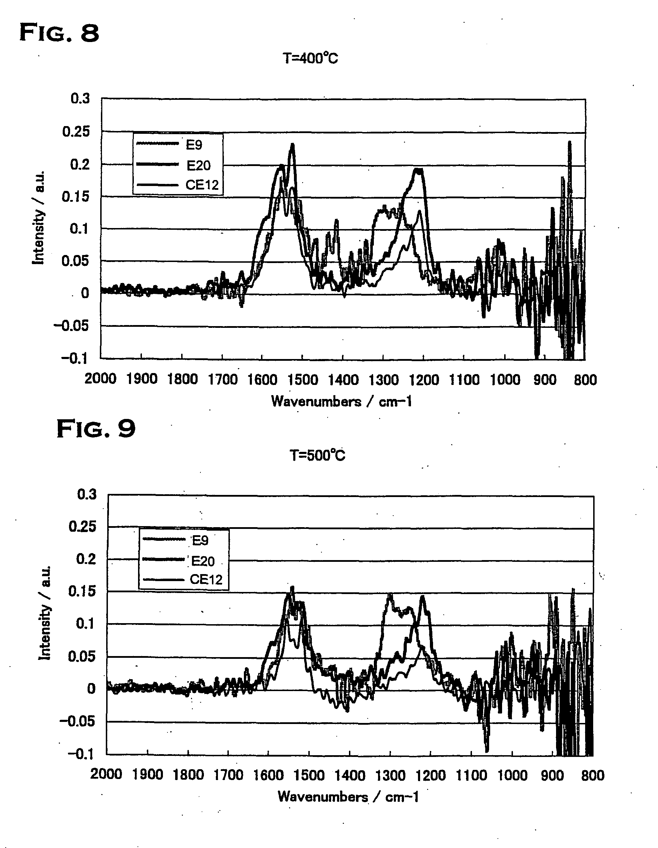

The NOx adsorption species and adsorption ability were measured in a sample being measured amount of 0.025±0.001 g by a diffuse reflectance spectroscopy analyzer (DSR) (carrier gas He). Diffuse reflectance spectrums were detected at measured temperatures of 200°C to 500°C (every 100°C). At first, a sample being measured was held at 600°C for 10 minutes in He (O₂ 5%) of 390 ccm, and then cooled to each measured temperature. Then, BG (background) measurement in He was conducted at each measured temperature. Thereafter, NO/O₂ (5%)/He gas was introduced, and then DSRs were measured at 1 min, 2 min, 5 min and 10 min. The above operation was performed at every temperature. The obtained results are shown in Fig. 6 to Fig. 9.

Figs. 6 to 9 shows the measured results of the adsorption wavelengths and their intensities at each temperature. From Fig. 6 to Fig. 9, an adsorption species of NO₂ was observed in all of Comparative Example 12, Example 9 and Example 20. On study of the results of Fig. 6 to Fig. 9 based on a known adsorption model, the adsorption configuration of NO₂ proved to be in a chelating state. Further, the order of the adsorption amount proved to be Comparative Example 12<Example 9<Example 20.

### NOx removal ability:

The NOx removal ability was measured in a sample being measured amount of 0.025±0.001 g by a thermal conductivity detector and a mass spectrometer (carrier gas He). A sample being measured was held at 600°C for 10 minutes in the He flow, and cooled to the adsorption temperature of 300°C. Then, NO/O₂ (5%)/He was introduced and held for 30 minutes. Thereafter, the gas was switched to the flow of He, and then the temperature was raised at 10°C/min to 600°C, and the desorbed gas was measured.

As the result, in Comparative Example 12, the desorption of NOx was not confirmed. By contrast, in Example 9, a gas of 30 in mass number was detected, so the desorption of NO gas was confirmed. In Example 20, gases of 30 and 32 in mass number were detected, so the desorption of NO₂ gas was confirmed.

From the results above, therefore, with an oxide of cerium dissolving Ca or Zr as a solid solution, the adsorption characteristic of NOx was found to be improved.

### Industrial Applicability

The oxide solid solution powder according to the present invention can be used as abrasives, catalyst carriers, ultraviolet absorption materials and the like. For example, when they are used as an abrasive, it can polish glass materials of glass substrates in a high polished surface precision; when as a catalyst carrier, etc., for automobiles, it can provide one excellent in the atmosphere control characteristic of A/F and removal performance of nitrogen oxides; and when as various kinds of ultraviolet absorption agents such as ones contained in cosmetics and coatings, it can provide an ultraviolet absorption agent having a high ultraviolet absorption ability.

## Claims

1. An oxide solid solution powder in which an oxide of calcium has been dissolved as a solid solution in a rare earth oxide composed mainly of an oxide of cerium.

2. The oxide solid solution powder according to claim 1, wherein an oxide of zirconium has been dissolved as a solid solution in the rare earth oxide composed mainly of the oxide of cerium.

3. The oxide solid solution powder according to claim 1 or 2, wherein an oxide of lanthanum and/or an oxide of praseodymium have/has been dissolved as a solid solution in the rare earth oxide composed mainly of the oxide of cerium.

4. The oxide solid solution powder according to any one of claims 1 to 3, wherein the ratio of a mass of cerium oxide to a total mass in terms of oxide of the oxide solid solution is 50 mass% or more.

5. A cerium-based abrasive comprising the solid solution powder, said solid solution powder being defined in any one of claims 1 to 4.

6. A manufacturing method of a glass substrate, **characterized by** using the cerium-based abrasive as defined in claim 5.

7. A catalyst comprising the solid solution powder, said solid solution powder being defined in any one of claims 1 to 4.
